# DEMANDE DE BREVET EUROPEEN

(11) **EP 1 580 959 A1**
(43) Date de publication de la demande: **28.09.2005**
(21) Numéro de dépôt: 05300110.3
(22) Date de dépôt: 11.02.2005
(51) Int. Cl.: H04L 29/06, G06F 1/00

(54) **Procédé de supervision de la sécurité d'un réseau**

(30) Priorité: 26.03.2004 FR 0450606
(71) Demandeur: Societé Française du Radiotéléphone, 92915 Paris la Défense Cedex (FR)
(72) Inventeur: Bulian, Fabrice, 94450, Limeil- Brevannes (FR)
(74) Mandataire: Schmit, Christian Norbert Marie

(57) **Abrégé**

Pour simplifier la gestion de la sécurité sur un réseau local un poste de supervision centralise les alarmes d'intrusion détectées (P1) par un serveur de détection d'intrusions. Le poste de supervision qualifie (P3) ces alertes en VRAIE alerte ou en FAUSSE alerte en fonction de la vulnérabilité du poste du réseau visé par la tentative d'intrusion. Les vulnérabilités des postes sont recensées (P2) par un serveur de recensement de vulnérabilités.

## Description

La présente invention a pour objet un procédé de supervision de la sécurité d'un réseau. Le domaine de l'invention est celui des réseaux et plus particulièrement celui de la sécurité sur les réseaux. Encore plus particulièrement le domaine de l'invention est celui de la sécurité sur les réseaux locaux.

Un but de l'invention est de très significativement faciliter la gestion de la sécurité sur les réseaux locaux.

Dans l'état de la technique, dans le domaine de la sécurité active, on connaît des outils permettant de détecter des intrusions sur un réseau à partir d'une base de données comportant des signatures caractéristiques de ces intrusions. Ces détections se font par une analyse en temps réel des données circulant sur le réseau. A chaque fois qu'un tel outil croit détecter une alerte intrusion, il émet un message d'alerte. On parle ici de croire, car un tel outil est en fait apte à détecter certaines configurations de dialogue et d'échange de trames qui sont susceptibles de correspondre à une intrusion. Dans les faits, il est tout à fait possible et même hautement probable que ce trafic réseau soit légitime.

Le problème de ce type d'outils est qu'ils sont particulièrement bavards et qu'ils émettent un grand nombre d'alertes, ce nombre allant croissant avec la taille du réseau. Parmi ces alertes environ 90% sont des fausses détections vraies. C'est-à-dire, qu'environ 90% de ces alertes ne correspondent en fait pas à des tentatives d'intrusion, mais à un usage licite du réseau. Il devient donc rapidement impossible de prendre en compte toutes les alertes émises. Face à une telle situation, la solution adoptée par les administrateurs réseau est de réduire la sensibilité de l'outil de détection en réduisant le nombre d'intrusions qu'est susceptible de détecter l'outil. Ce faisant ils limitent bien le nombre de messages d'alertes émis, mais ils font aussi le choix de ne plus tenir compte d'un certain nombre d'intrusions possibles. En rendant leur travail possible, ils affaiblissent donc la sécurité de leur réseau.

Dans l'état de la technique, dans le domaine de la sécurité active, on connaît des outils de collecte et d'analyse de fichiers journaux (appelés également fichiers de "logs") des postes surveillés. Ce type d'outils permet par agrégation et corrélation des fichiers journaux collectés, de détecter une activité anormale sur un poste du réseau. L'intérêt de ce type d'outil est, outre la détection, l'aspect supervision centralisée.

Dans l'état de la technique, dans le domaine de la sécurité passive, on connaît aussi des outils d'analyse de vulnérabilité qui réalisent des audits de sécurité d'un réseau. De tels outils sont utilisés pour la gestion des mises à jour des postes de travail en terme de sécurité. De tels outils permettent donc à un administrateur réseau de savoir quelles mises à jour doivent être installées sur quels postes du réseau. Une vulnérabilité est aussi appelée une faille.

Ces outils sont aussi très bavards et si l'administrateur les écoutait, il passerait son temps à installer des mises à jours sur les postes du réseau.

On constate à ce stade qu'un administrateur réseau croule sous les informations de sécurité et d'insécurité relatives au réseau dont il a la charge. Cela est d'autant plus un problème que la plupart de ces informations correspondent à des fausses alertes.

Dans l'invention on résout ces problèmes en maintenant les outils de détection à leur sensibilité maximum et en corrélant les informations renvoyées par les uns et les autres. En cas d'émission d'un message d'alerte intrusion, ce message comporte, selon l'invention, un identifiant de vulnérabilité et un identifiant de poste cible. Un poste chargé de la supervision de la sécurité interroge donc une base de vulnérabilité concernant le poste cible afin de déterminer si celui-ci est sensible à l'attaque objet du message d'alerte intrusion. Si le poste n'y est pas sensible, alors il s'agit de toute évidence d'une alerte qui n'a aucune chance d'aboutir et qui par conséquent sera classée comme alerte mineur ou encore comme fausse alerte. Ce procédé permet de limiter fortement le nombre d'alertes intéressantes en supprimant la majorité des fausses alertes. L'intérêt est donc de ne remonter comme alerte que celles qui ont la probabilité la plus forte d'aboutir à une intrusion.

Dans une variante, le message d'alerte est directement qualifié de fausse alerte si l'adresse cible ne correspond à aucune machine sur le réseau.

Dans la mesure où le nombre de vraies alertes est fortement réduit, cela rend le traitement de ces vraies alertes moins coûteux en termes de ressources et permet de tester efficacement la mise en oeuvre de scénarios d'intrusion complexes sur le réseau.

Une implémentation pour optimiser le traitement des alertes avec l'invention décrite consiste en:
- un outil central de gestion des fichiers journaux,
- des journaux (de bord) ou alertes IDS (Intrusion Détection System, pour système de détection d'intrusion) qui sont remontées via l'outils central de gestion des fichiers journaux,
- un outils d'analyse des vulnérabilité couplé à la base de données du référentiel réseau.

L'outil central de gestion des fichiers journaux intègre les alertes IDS au même titre que les fichiers journaux. Il est connecté à la base de données contenant le référentiel réseau et les résultats des audits de vulnérabilité. Ainsi, une corrélation centralisée de ces informations permet de réduire le nombre d'alertes présentées sur le poste de supervision mais aussi d'optimiser la détection par scénarios du fait d'une plus faible volumétrie d'alertes et d'une plus grande probabilité d'alertes réelles.

L'invention a donc pour objet un procédé de supervision centralisée d'un réseau comportant plusieurs postes interconnectés et au moins des moyens de détection des intrusions, et des moyens de gestion des vulnérabilités d'au moins un des postes du réseau, la supervision du réseau étant réalisée depuis au moins un poste du réseau:
- les moyens de détection d'intrusions alimentent une base de données en émettant des messages d'alerte intrusion, une intrusion étant détectée par analyse des flux de données sur le réseau,
- les moyens de gestion de vulnérabilités alimentent une base de données en effectuant, poste par poste, un recensement des vulnérabilités, le procédé étant caractérisé en ce que:
   - le poste de supervision qualifie chaque alerte intrusion émise par les moyens de détection des intrusions en faux positif, c'est-à-dire fausse alerte, ou en vrai positif, c'est-à-dire vraie alerte, cette qualification étant effectuée en recherchant, dans les moyens de gestion des vulnérabilités, pour le poste concerné par l'alerte, si une vulnérabilité correspondante existe.

Avantageusement l'invention est aussi caractérisée en ce que l'analyse des flux de données est réalisée en temps réel par l'analyse des trames circulant sur le réseau.

Avantageusement l'invention est aussi caractérisée en ce que l'analyse des flux de données est réalisée en temps différé à partir d'au moins un fichier journal enregistré sur au moins un poste du réseau.

Avantageusement l'invention est aussi caractérisée en ce que:
- un message d'alerte intrusion comporte un identifiant d'intrusion,
- une vulnérabilité est associée à un identifiant de vulnérabilité,
- les identifiants d'intrusion et les identifiants de vulnérabilité appartiennent au même ensemble d'identifiants.

Avantageusement l'invention est aussi caractérisée en ce que:
- un message d'alerte intrusion comporte une adresse réseau du poste concerné par l'alerte intrusion,
- une vulnérabilité recensée est associée à au moins une adresse réseau d'un poste sur le réseau.

Avantageusement l'invention est aussi caractérisée en ce que le réseau comporte des moyens de cartographie du réseau permettant le recensement des postes connectés au réseau, une alerte intrusion n'étant qualifiée en vrai positif que si le poste concerné appartient bien au réseau, le poste de supervision interrogeant les moyens de cartographie pour savoir si un poste, identifié par une adresse, appartient au réseau.

Avantageusement l'invention est aussi caractérisée en ce que le poste chargé de la supervision valide et invalide des scénarios d'attaques contre le réseau à partir des alertes intrusions qualifiées.

L'invention sera mieux comprise à la lecture de la description qui suit et à l'examen des figures qui l'accompagnent. Celles-ci sont présentées à titre indicatif et nullement limitatif de l'invention. Les figures montrent:
Figure 1: une illustration d'un réseau sur lequel l'invention est mise en oeuvre.
Figure 2: une illustration d'étapes du procédé selon l'invention.
Figure 3: une illustration d'une partie du contenu d'un message d'alerte.

Dans la description, lorsque l'on prête une action à un appareil, poste, serveur ou autre, cette action est réalisée par un microprocesseur de l'appareil commandé par des codes instructions enregistrés dans une mémoire dudit appareil.

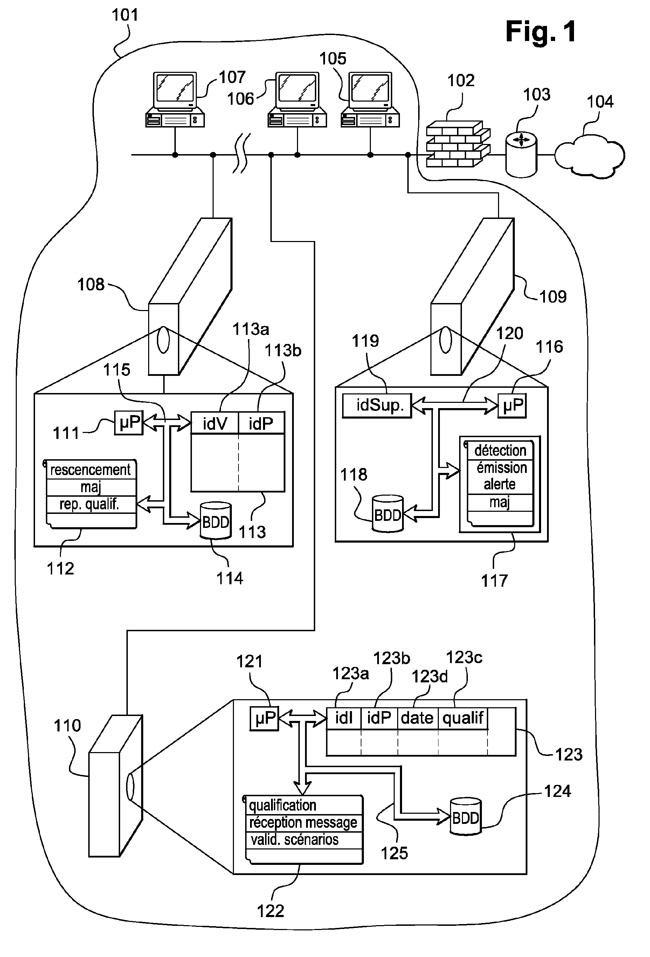

La figure 1 montre un réseau 101 local connecté à un serveur 102 pare-feu. Le serveur 102 est aussi connecté à un routeur 103. Le routeur 103 est lui connecté à un réseau 104 global de type Internet. Le réseau 101 comporte plusieurs postes 105 à 110. Sur le réseau 101 chaque poste est identifié au moins par une adresse qui lui permet de dialoguer avec les autres postes du réseau. Dans la pratique, un poste est considéré comme faisant partie d'un réseau si au moins une de ses interfaces de connexion est associée à une adresse valide pour ledit réseau.

Les postes 105 à 107 sont des postes de travail sans fonction particulière sur le réseau 101. Le poste 108 est un serveur 108 de gestion des vulnérabilités qui comporte les moyens de gestion des vulnérabilités du réseau 101. Le poste 109 est un serveur 109 de détection des intrusions qui assure la surveillance des communications sur le réseau 101 et émet les alertes en conséquence. Le poste 110 est le poste chargé de la supervision de la sécurité sur le réseau. Le poste 110 est en particulier le destinataire des messages d'alerte intrusion émis par le serveur 109.

La figure 1 montre que le serveur 108 comporte un microprocesseur 111, une mémoire de programme 112, une mémoire 113 d'enregistrement des vulnérabilités et une mémoire 114 de configuration du recensement des vulnérabilités. Les éléments 111 à 114 sont interconnectés par un bus 115.

La mémoire 112 comporte des codes instructions commandant le microprocesseur 111 au moins lors d'étapes de recensement de vulnérabilités, de mise à jour de la mémoire 114 et de réponse à une interrogation sur la vulnérabilité d'un poste relativement à un identifiant de vulnérabilité. Une étape de recensement des vulnérabilités permet la mise à jour de la mémoire 113. La mémoire 113 comporte au moins 2 colonnes, l'une 113a correspondant à des identifiants de postes, l'autre 113b correspondant à des identifiants de vulnérabilités. Dans cette description un identifiant de poste est une adresse du poste sur le réseau. On utilise par exemple les adresses Internet que ce soit dans leur version 4, IPV4, ou dans leur version 6 IPV6. Bien entendu d'autres modes d'identification des postes sont envisageables.

La mémoire 113 est donc une base de données des vulnérabilités recensées sur le réseau 101. Chaque enregistrement de la mémoire 113 est donc entièrement identifié par un identifiant de vulnérabilité et un identifiant de poste. La mémoire 113 permet d'associer un identifiant de vulnérabilité à un identifiant de poste

La mémoire 114 comporte dans la pratique une base de données comportant les descriptions et les modes de détection des vulnérabilités sur un poste, ces descriptions et mode de détection étant associés à un identifiant de vulnérabilité. La mémoire 114 est une base de données des vulnérabilités connues à ce jour. La mémoire 114 est mise à jour régulièrement via le réseau 104 par exemple.

La figure 1 montre que le serveur 109 comporte un microprocesseur 116, une mémoire de programme 117, une mémoire 118 de configuration et une mémoire 119 d'adresses de poste de supervision. Les éléments 116 à 119 sont interconnectés via un bus 120.

La mémoire 117 comporte des codes instructions commandant le microprocesseur 116 au moins lors d'étapes de détection d'intrusions, d'émission d'un message d'alerte et de mise à jour de la mémoire 118.

La mémoire 118 est une base de données des intrusions connues à ce jour. La mémoire 118 associe un mode de détection d'une intrusion et / ou une description de l'intrusion, à un identifiant d'intrusion. La mémoire 118 est mise à jour à intervalle régulier, via le réseau 104 par exemple.

La mémoire 119 comporte l'adresse du poste vers lequel le serveur 109 émet un message d'alerte lors de la détection d'une intrusion. Dans l'exemple de la description, le poste effectuant la supervision est le poste 110.

La figure 1 montre que le poste 110 comporte un microprocesseur 121, une mémoire 122 de programme, une mémoire 123 d'alertes et, dans une variante, une mémoire 124 de scénarios. Les éléments 121 à 124 sont interconnectés par un bus 125.

La mémoire 122 comporte des codes instructions commandant le microprocesseur 121 au moins lors d'étapes de réception d'au moins un message d'alerte et de qualification dudit au moins un message d'alerte. Dans une variante la mémoire 122 comporte aussi de codes instructions commandant le microprocesseur lors d'étapes de validation de scénarios.

La mémoire 123 est une base de données des messages d'alerte intrusion émis sur le réseau 101 par au moins le serveur 109. Dans l'invention la mémoire 123 comporte au moins 3 colonnes. Une colonne 123a correspond à des identifiants d'intrusion, une colonne 123b correspond à des identifiants de postes, et une colonne 123c correspond à la qualification des intrusions. Dans une variante la mémoire 123 comporte d'autres colonnes comme par exemple une colonne 123d de dates de détections d'intrusions.

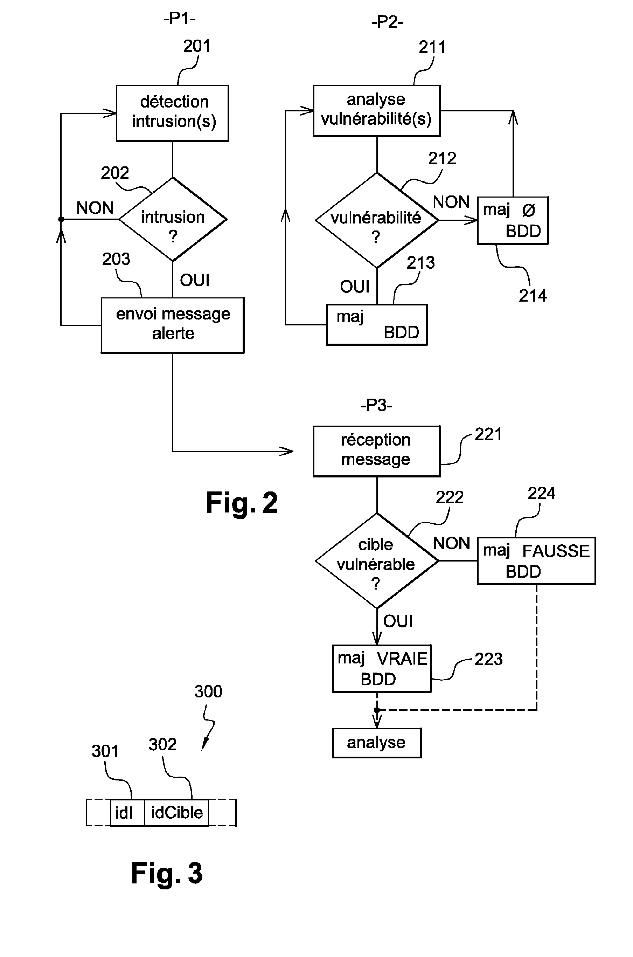

La figure 2 illustre le fait que l'invention est mise en oeuvre à travers la coopération de 3 processus exécutés simultanément sur le réseau 101. Le processus P1 est un processus de détection des intrusions. Le processus P2 est un processus d'analyse des vulnérabilités du réseau. Le processus P3 est un processus d'analyse et de qualification des informations produites par les processus P1 et P2. Les processus P1, P2 et P3 sont des processus permanents, c'est-à-dire qu'ils s'exécutent tant qu'ils ne sont pas explicitement stoppés par un opérateur.

Les étapes du processus P1 sont mises en oeuvre par le serveur 109. Le processus P1 comporte une étape 201 de détection d'intrusion. Dans l'étape 201 le serveur 109 analyse chaque trame émise sur le réseau 101. Cette analyse consiste, par exemple, à effectuer une recherche de motifs dans les données véhiculées par la trame. Les motifs à rechercher sont ceux stockés dans la mémoire 118. Chacun des motifs est associé à un identifiant d'intrusion. Pour chaque motif, et plus généralement pour chaque critère permettant de détecter une intrusion, on passe à une étape 202 d'évaluation du critère. Si l'évaluation du critère est négative, on passe au critère suivant via l'étape 201, sinon on passe à une étape 203 de production et d'émission d'un message d'alerte.

La figure 3 illustre le fait qu'un message 300 d'alerte comporte au moins un identifiant 301 d'intrusion, et un identifiant 302 de cible. L'identifiant d'intrusion est celui du critère en cours de validation et dont l'évaluation s'est révélée positive. Cet identifiant est un point d'entrée dans la base de données 118. Dans un exemple préféré, les identifiants d'intrusion sont standardisés, par exemple selon le standard CVE (Common Vulnerability and Exposure, pour vulnérabilité et exposition communes). On note ici qu'il existe d'autres standards comme BugTraq. Un tel identifiant est produit de manière centralisée par un organisme de référence dans le domaine de la sécurité. Dans l'invention cet identifiant est utilisé pour identifier un enregistrement dans la base de données 118.

L'identifiant de la cible est, dans un exemple préféré, une adresse d'un poste sur le réseau. Chaque trame analysée a une structure connue et comporte un identifiant de destinataire et un identifiant d'émetteur de la trame. L'identifiant de cible du message 300 correspond à l'identifiant destinataire de la trame analysée.

Dans la pratique le message 300 comporte d'autres informations que les identifiants 301 et 302. Cependant ceux-ci suffisent à la mise en oeuvre de l'invention. Une autre information est par exemple l'identifiant de l'émetteur de la trame analysée.

Le message 300 d'alerte une fois produit est émis, par le serveur 109, à destination du poste 110.

Dans la pratique il existe au moins une autre raison de produire un message d'alerte intrusion. En effet, un certain nombre de postes sur le réseau 101 peuvent être des serveurs que ce soit d'applications ou de fichiers. De tels serveurs produisent des fichiers journaux correspondant à leur activité. Le serveur 109 accède à ces fichiers journaux pour en analyser le contenu et y détecter une éventuelle activité suspecte, comme par exemple un grand nombre de tentatives de connexion échouant depuis un poste unique. La détection d'une telle activité dans un fichier journal provoque l'émission d'un message d'alerte intrusion par le serveur 109. Il y a donc au moins deux types de détections d'intrusions: un type temps réel par une analyse des communications sur le réseau et un type temps différé par une analyse des fichiers journaux des différents serveurs du réseau.

Une fois le message 300 émis, on passe de l'étape 203 à l'étape 201.

La figure 2 illustre le fait que le processus P2 comporte une étape 211 d'analyse des vulnérabilités du réseau. Les étapes du processus P2 sont mises en oeuvre par le serveur 108. Dans l'étape 211, le serveur 108 teste, pour chaque poste du réseau 101, l'ensemble des vulnérabilités décrites dans la base de vulnérabilités 114. Pour chaque vulnérabilité, et pour chaque poste, le serveur 108 effectue donc l'étape 212 de test. Pour effectuer ce test, le serveur 108 utilise donc un identifiant de poste idP et un identifiant de vulnérabilité idV. Si le poste est vulnérable alors on passe à une étape 213 de mise à jour positive de la base 113. Si le poste n'est pas vulnérable alors on passe à une étape 214 de mise à jour négative de la base 113.

Dans l'étape 213, le serveur 108 parcourt la base 113 pour déterminer s'il existe déjà un enregistrement correspondant à idV et IdP. Si ce n'est pas le cas, alors le serveur 108 ajoute un tel enregistrement à la base 113. Si c'est le cas alors le serveur 108 ne fait rien. De l'étape 213 on passe à l'étape 211.

Dans l'étape 214, le serveur 108 parcourt la base 113 pour déterminer s'il existe déjà un enregistrement correspondant à idV et IdP. Si c'est le cas, alors le serveur 108 supprime cet enregistrement de la base 113. Si ce n'est pas le cas alors le serveur 108 ne fait rien. De l'étape 214 on passe à l'étape 211.

La figure 2 montre que l'émission d'un message 300 d'alerte par le serveur 109 provoque une réaction du serveur 110 destinataire dudit message 300 d'alerte. Les étapes du processus P3 sont mises en oeuvre par le poste 110. Dans une étape 221, le poste 110 reçoit le message 300 d'alerte intrusion puis passe à une étape 222 de qualification du message 300. Dans l'étape 222, le poste 110 utilise les identifiants 301 et 302 pour produire un message d'interrogation vers le serveur 108. Ce message d'interrogation comporte l'identifiant 301 en tant qu'identifiant de vulnérabilité, et l'identifiant 302 en tant qu'identifiant de poste. Ce message d'interrogation un fois produit est émis vers le serveur 108. A la réception de ce message d'interrogation, le serveur 108 parcourt la mémoire 113 à la recherche d'un enregistrement correspondant à la fois à l'identifiant de vulnérabilité du message d'interrogation et à l'identifiant de poste du message d'interrogation. Si le serveur 113 trouve un tel enregistrement alors le serveur 113 produit un message de réponse positif. Sinon le serveur 113 produit un message de réponse négatif. Une fois produit le message de réponse est émis du serveur 108 vers le poste 110 ayant émis le message d'interrogation. Un poste est vulnérable à une intrusion si, pour l'identifiant d'intrusion correspondant, il est recensé dans la base 113 de données.

Dans l'étape 222, si le poste 110 reçoit un message de réponse positive à son message d'interrogation, alors il passe à une étape 223 de mise à jour VRAIE de la base de donnée 123. Sinon il passe à une étape 224 de mise à jour FAUSSE de la base de données 123.

Dans l'étape 223, le poste 110 crée un nouvel enregistrement dans la mémoire 123. Le poste 110 renseigne la colonne 123a de cet enregistrement à partir de l'identifiant 301 du message 300. Le poste 110 renseigne la colonne 123b de cet enregistrement à partir de l'identifiant 302 du message 300. Le poste 110 renseigne la colonne 123c de cet enregistrement en le positionnant à VRAIE alerte.

L'étape 224 est identique à l'étape 223 si ce n'est que le poste 110 renseigne la colonne 123c de l'enregistrement créé en le positionnant à FAUSSE alerte.

Dans l'invention, on constate qu'il y a identité entre les identifiants de vulnérabilités et les identifiants d'intrusions. Dans la pratique il est donc possible de n'utiliser qu'une seule des mémoires 114 ou 118 pour effectuer les opérations de recensement des vulnérabilités et de détection des intrusions. Cette mémoire unique comporte alors des enregistrements regroupant les informations des deux mémoires 114 et 118. Ces informations sont pour chaque vulnérabilité/intrusion un identifiant unique de vulnérabilité/intrusion, une description et les modes de détection de la vulnérabilité sur un poste et un mode de détection de l'intrusion, et ou une description de l'intrusion. Dans la pratique les descriptions de vulnérabilité et d'intrusion sont identiques. Cette mémoire unique est accédée par les serveurs 108 et 109 via le réseau 101 par exemple. Dans un autre exemple cette mémoire unique fait partie du serveur 108 et le serveur 109 y accède via le réseau 101.

L'invention permet donc de n'avoir qu'une seule mémoire de configuration à maintenir pour la mise en oeuvre d'un recensement de vulnérabilités et d'une détection d'intrusions.

L'invention permet aussi à un utilisateur du poste 110 de supervision de trier rapidement parmi les alertes d'intrusions de la mémoire 123 entre celles qui sont de vraies alertes et celles qui sont de fausses alertes. L'invention permet donc d'aller directement à l'essentiel. Dans un exemple préféré, le poste 110 émet, à intervalles réguliers, un rapport ne comportant que les vraies alertes. Dans une variante ce rapport est émis à chaque détection d'une vraie alerte.

Dans une variante de l'invention, le poste 110 peut accéder une carte du réseau. De manière simplifiée une carte du réseau est une liste d'adresses actives sur le réseau, c'est-à-dire d'adresses correspondant effectivement à un poste sur le réseau. Une telle carte est produite par un logiciel de cartographie installé sur n'importe quel poste du réseau. Cette carte est alors accessible via ledit réseau. Dans cette variante, si l'identifiant 302 du message 300 correspond à une adresse qui n'est pas présente dans la carte du réseau, alors le poste 110 passe directement de l'étape 221 à l'étape 224. En effet, un poste qui n'existe pas ne peut pas être vulnérable.

Dans une autre variante de l'invention le poste 110 effectue une analyse de la mémoire 123 de manière à y discerner une cohérence correspondant à un scénario d'attaque connu. Dans l'invention cette analyse se limite aux vraies alertes, ce qui permet d'accélérer le traitement et donc d'envisager plus de scénarios. Un scénario est, dans l'invention et par exemple, une succession de vraies alertes ciblant une même machine dans un ordre chronologique donné. Les scénarios évalués sont enregistrés dans la mémoire 124 qui est mise à jour de la même manière que les mémoires 114 et 118.

Si un scénario d'attaque est détecté, cela provoque l'émission d'un message d'alerte intrusion. Ce message d'alerte est traité comme précédemment décrit pour le message 300 d'alerte intrusion. L'invention permet donc non seulement d'accélérer la détection de scénarios d'attaque, mais elle permet aussi de qualifier le résultat de la détection. Le procédé selon l'invention est donc applicable à deux niveaux de gestion de la sécurité d'un réseau. Il est applicable d'une part pour l'alimentation d'une base de données d'alertes intrusions. Il est applicable d'autre part pour l'analyse des enregistrements de cette base de données, et aussi pour la qualification des résultats de cette analyse.

## Revendications

1. Procédé de supervision centralisée d'un réseau (101) comportant plusieurs postes (105-110) interconnectés et au moins des moyens (116-120) de détection des intrusions, et des moyens (111, 115) de gestion des vulnérabilités d'au moins un des postes du réseau, la supervision du réseau étant réalisée depuis au moins un poste (110) du réseau:
- les moyens de détection d'intrusions alimentent (P1) une base de données (123) en émettant des messages d'alerte intrusion, une intrusion étant détectée par analyse des flux de données sur le réseau,
- les moyens de gestion de vulnérabilités alimentent (P2) une base (113) de données en effectuant, poste par poste, un recensement des vulnérabilités,
le procédé étant **caractérisé en ce que**:
- un message d'alerte intrusion comporte un identifiant (301) d'intrusion,
- une vulnérabilité est associée à un identifiant de vulnérabilité,
- les identifiants d'intrusion et les identifiants de vulnérabilité appartiennent au même ensemble d'identifiants.
- le poste de supervision qualifie (P3, 222 à 224) chaque alerte intrusion émise par les moyens de détection des intrusions en faux positif, c'est-à-dire fausse alerte, ou en vrai positif, c'est-à-dire vraie alerte, cette qualification étant effectuée en recherchant, dans les moyens de gestion des vulnérabilités, pour le poste concerné par l'alerte, si une vulnérabilité correspondante existe.

2. Procédé selon la revendication 1, **caractérisé en ce que** l'analyse des flux de données est réalisée en temps réel par l'analyse des trames circulant sur le réseau.

3. Procédé selon l'une des revendications 1 ou 2, **caractérisé en ce que** l'analyse des flux de données est réalisée en temps différé à partir d'au moins un fichier journal enregistré sur au moins un poste du réseau.

4. Procédé selon l'une des revendications 1 à 3, **caractérisé en ce que**:
- un message d'alerte intrusion comporte une adresse (302) réseau du poste concerné par l'alerte intrusion,
- une vulnérabilité recensée est associée à au moins une adresse réseau d'un poste sur le réseau.

5. Procédé selon l'une des revendications 1 à 4, **caractérisé en ce que** le réseau comporte des moyens de cartographie du réseau permettant le recensement des postes connectés au réseau, une alerte intrusion n'étant qualifiée en vrai positif que si le poste concerné appartient bien au réseau, le poste de supervision interrogeant les moyens de cartographie pour savoir si un poste, identifié par une adresse, appartient au réseau.

6. Procédé selon l'une des revendications 1 à 5, **caractérisé en ce que** le poste chargé de la supervision valide et invalide des scénarios d'attaques contre le réseau à partir des alertes intrusions qualifiées.
